# FASCICULE DE BREVET EUROPEEN

(11) **EP 3 044 623 B1**
(45) Date de publication et mention de la délivrance du brevet: **13.01.2021**
(21) Numéro de dépôt: 14758598.8
(22) Date de dépôt: 10.07.2014
(51) Int. Cl.: G02B 7/183, G02B 23/06

(54) **TELESCOPE A FAIBLES DEFORMATIONS**
TELESKOP MIT GERINGER VERFORMUNG
LOW-DEFORMATION TELESCOPE

(30) Priorité: 12.09.2013 FR 1302129
(43) Date de publication de la demande: 20.07.2016
(73) Titulaire: Safran Electronics & Defense, 75015 Paris (FR)
(72) Inventeur: FURUI, Christophe, F-92100 Boulogne-Billancourt (FR); DUTARTRE Sylvain, 92100 Boulogne-Billancourt (FR)
(74) Mandataire: Plasseraud IP
(86) Numéro de dépôt international: PCT/FR2014/051777
(87) Numéro de publication internationale: WO 2015/036666

(56) Documents cités:
- EP-A1- 0 362 069
- FR-A1- 2 823 573
- US-A- 3 438 045
- US-A- 5 760 979
- US-A1- 2013 208 367
- US-B1- 6 925 260
- ANONYMOUS: SPIE, PO BOX 10 BELLINGHAM WA 98227-0010, USA, 1 janvier 2010 (2010-01-01), XP040539984,

## Description

La présente invention concerne un télescope dont l'architecture a été modifiée pour réduire des déformations qui sont susceptibles d'affecter différentes parties du télescope, ainsi qu'un système optique d'observation qui comprend un tel télescope.

Certaines applications nécessitent de monter une optique d'imagerie sur un dispositif à orientation variable, qui est capable de guider en site et en azimut une ligne de visée de l'optique d'imagerie. Couramment, une optique dioptrique, c'est-à-dire une optique qui est exclusivement à base de lentilles, est utilisée pour de telles applications, car les dimensions de telles optiques à lentilles sont compatibles avec les contraintes d'intégration dans le dispositif à orientation variable.

Néanmoins, certaines applications d'observation et de détection multi-spectrales et/ou à haute résolution nécessitent d'utiliser des optiques catadioptriques, de type télescope à miroirs, à la place d'optiques dioptriques. En effet, de telles optiques catadioptriques ne présentent pas de dispersion spectrale et peuvent être plus légères que des optiques à lentilles à dimension égale de pupille. D'autre part, pour des diamètres de pupille qui sont supérieurs à 100 mm (millimètre), la faisabilité d'optiques dioptriques devient problématique, pour des raisons de masse et d'encombrement. De façon connue, un tel télescope peut comprendre les éléments suivants :
- un miroir primaire, qui possède une face antérieure réfléchissante, une face postérieure, et un bord périphérique connectant extérieurement les faces antérieure et postérieure ;
- un support, qui s'étend sur un même premier côté du miroir primaire que la face antérieure ; et
- un miroir secondaire, qui est plus petit que le miroir primaire et qui est maintenu rigidement par le support en avant de la face antérieure.

Or les applications envisagées pour un tel télescope peuvent nécessiter une qualité d'image élevée, et aussi nécessiter de contrôler sa ligne de visée avec une grande précision. Ces exigences requièrent à leur tour de réduire le plus possible des déformations involontaires qui seraient susceptibles d'affecter le miroir primaire, le support, ainsi que le miroir secondaire. De façon connue, des déformations de l'un ou l'autre des miroirs, ou des deux, peuvent provoquer un flou d'imagerie qui dégrade la résolution des images qui sont saisies. Des déformations qui affectent le support peuvent aussi contribuer au flou d'imagerie, notamment lorsque la position relative des deux miroirs est modifiée, mais elles peuvent en outre modifier la direction de la ligne de visée du télescope.

De plus, des déformations dynamiques du télescope sont provoquées par des vibrations d'origine externe qui sont transmises aux éléments du télescope. Tel est le cas, par exemple, pour un télescope qui est embarqué à bord d'un hélicoptère : la rotation des rotors de l'hélicoptère produit des vibrations à basse fréquence, dont les fréquences fondamentales et celles des premières harmoniques sont inférieures à 100 Hz (hertz). Les modes propres de déformation du télescope doivent alors présenter des fréquences qui sont très supérieures à celle des vibrations externes, pour éviter que ces dernières ne provoquent pour le télescope des déformations par vibration qui aient des amplitudes nuisibles à la stabilité de la ligne de visée.

Dans certains télescopes connus avant la présente invention, le support qui maintient le miroir secondaire est fixé sur le miroir primaire au niveau du bord périphérique de ce dernier. Des déformations du miroir primaire sont alors transmises au support, causant des modifications dans les positions relatives des deux miroirs, en plus de celles qui résultent des déformations du support.

Dans d'autres télescopes aussi connus avant la présente invention, le miroir primaire et le support du miroir secondaire sont fixés indépendamment l'un de l'autre sur un élément de base commun. Cet élément de base constitue alors une pièce supplémentaire qui contribue à augmenter le poids et l'encombrement du télescope.

Un télescope suivant la préambule de la revendication 1 est connu de US 3 438 045 A.

Le document FR2823573 A1 divulgue des articulations du type joint de cardan.

A partir de cette analyse, un premier but de l'invention consiste à fournir un télescope qui présente des déformations statiques et dynamiques qui soient réduites. Notamment, un tel télescope peut être recherché pour être utilisé à bord d'un hélicoptère en vol. Pour une telle utilisation, les déformations dynamiques du télescope doivent être réduites pour les fréquences de vibration qui correspondent au fonctionnement des rotors de l'hélicoptère.

Un second but de l'invention consiste à fournir un tel télescope qui puisse être assemblé de façon autonome, indépendamment d'une embase de chargement sur laquelle il est destiné à être fixé pour son utilisation. En effet, un tel assemblage autonome du télescope permet de le tester séparément, avant de l'associer avec un dispositif à orientation variable par exemple, et facilite la logistique de production et de livraison du système complet.

Enfin, un troisième but de l'invention est que le télescope puisse être facilement intégré à un système complet d'observation et de détection, notamment en réduisant le poids et les dimensions du télescope.

L' invention est définie par les revendications.

Pour atteindre l'un au moins de ces buts ou d'autres, un premier aspect de la présente invention propose un télescope à miroirs primaire et secondaire tels que rappelés plus haut, avec le support pour maintenir le miroir secondaire en avant de la face antérieure du miroir primaire, mais qui comprend en outre les éléments suivants :
- trois portions de fixation, qui sont situées sur un même second côté du miroir primaire que la face postérieure, et qui sont adaptées pour fixer le télescope par ce second côté sur une embase externe au télescope ; et
- trois connexions rigides, qui relient le support respectivement aux trois portions de fixation, à travers le miroir primaire et à distance du bord périphérique en direction d'une zone centrale du miroir primaire, et chaque connexion rigide est reliée en outre au miroir primaire latéralement par rapport à une direction de liaison du support à la portion de fixation qui est relative à cette connexion rigide, les trois connexions rigides traversant chacune le miroir primaire entre la face antérieure réfléchissante et la face postérieure respectivement à trois endroits de la face antérieure réfléchissante séparés les uns des autres, et chaque connexion rigide reliant le support à la portion de fixation respective indépendamment du miroir primaire.

Ainsi, chaque connexion rigide traverse le miroir primaire, du premier côté vers le second côté de celui-ci. Elle permet d'arrimer le support sur le premier côté et, simultanément, de fixer l'ensemble du télescope sur l'embase externe par le second côté du miroir primaire. Ainsi, les contraintes de retenue du support et du miroir secondaire sur l'embase externe ne sont pas transmises directement au miroir primaire. De cette façon, des déformations statiques du miroir primaire que provoqueraient de telles contraintes sont évitées.

En outre, la localisation des connexions rigides à l'intérieur du bord périphérique du miroir primaire permet de réduire la taille du support, par rapport à un support qui s'étendrait jusqu'au bord périphérique ou au-delà. La masse du support est aussi réduite. Cette réduction de masse combinée avec la réduction des dimensions du support augmente les fréquences des modes propres de vibration par déformation du support. Les fréquences des modes propres du support peuvent ainsi être supérieures aux fréquences de vibrations qui sont transmises au télescope par des sources vibrantes externes, si bien que les déformations du télescope qui sont causées par ces sources vibrantes externes ont des amplitudes réduites. En particulier, la fréquence la plus faible de tels modes propres du support peut être supérieure à 600 Hz environ, si bien que le télescope est particulièrement adapté pour être utilisé à bord d'un hélicoptère en vol.

Dans des réalisations particulières de l'invention, chaque connexion rigide peut comprendre un goujon avec une première extrémité de ce goujon qui est connectée rigidement au support, et une seconde extrémité du même goujon qui est opposée à sa première extrémité et qui forme une des portions de fixation. Dans ce cas, chaque connexion rigide peut comprendre en outre un écrou qui est disposé pour retenir fixement le support sur la première extrémité du goujon. Indépendamment, chaque goujon de connexion rigide peut être collé au miroir primaire par une surface latérale de ce goujon.

Chaque connexion rigide est reliée au miroir primaire par l'intermédiaire d'un cardan à déformation solide, la connexion rigide étant ainsi solidaire d'un étage interne du cardan, et un étage externe de chaque cardan étant solidaire du miroir primaire. De cette façon, un défaut d'inclinaison de chaque connexion rigide produit une déformation du miroir primaire qui est réduite. La qualité des images qui sont formées par le télescope est ainsi préservée.

Le miroir primaire et chaque cardan forment une pièce unique qui est constituée d'un seul matériau solide et continu entre le miroir primaire et l'étage interne du cardan. En outre, le miroir primaire peut présenter une fente qui s'étend autour de chaque connexion rigide et transversalement par rapport à la direction de liaison du support à la portion de fixation relative à cette connexion rigide, et cette fente est située entre le cardan et la face antérieure du miroir primaire. Ainsi, une déformation du cardan qui est provoquée par un défaut d'inclinaison d'une des connexions rigides est transmise à la surface antérieure réfléchissante du miroir primaire dans une proportion qui est encore plus réduite. La qualité des images qui sont formées par le télescope est ainsi préservée encore plus.

Dans des réalisations préférées de l'invention, le support du miroir secondaire peut comprendre :
- une couronne externe qui entoure un bord périphérique du miroir secondaire, en étant distante radialement de ce bord périphérique du miroir secondaire ; et
- trois segments intermédiaires qui sont situés entre la couronne externe et le bord périphérique du miroir secondaire, chacun de ces segments intermédiaires étant connecté au miroir secondaire au niveau de deux extrémités opposées de ce segment intermédiaire, et connecté à la couronne externe au niveau d'une zone centrale du même segment intermédiaire qui est située entre ses deux extrémités.

La transmission au miroir secondaire des déformations du support est ainsi minimisée, si bien que le miroir secondaire conserve mieux sa forme initiale. La qualité optique des images formées par le télescope est ainsi préservée dans une mesure encore supplémentaire. Préférablement, les segments intermédiaires peuvent être continus entre deux segments intermédiaires voisins autour du miroir secondaire, de façon à former une couronne intermédiaire qui est située radialement entre la couronne externe et le miroir secondaire. La couronne intermédiaire peut ainsi être connectée à la couronne externe en trois endroits qui sont séparés et répartis angulairement autour du miroir secondaire, et connectée au miroir secondaire en six autres endroits qui sont aussi séparés et répartis angulairement autour du miroir secondaire.

Chaque extrémité de segment intermédiaire peut être connectée par collage au bord périphérique du miroir secondaire.

Dans de telles réalisations de l'invention, le support peut comprendre en outre une structure rigide tripode ayant elle-même :
- trois pieds qui sont reliés un-à-un aux trois connexions rigides qui traversent le miroir primaire ;
- six jambes qui aboutissent par paires à chacun des trois pieds ; et
- six jonctions séparées angulairement le long de la couronne externe, et qui connectent chacune rigidement cette couronne externe à une extrémité supérieure d'une des jambes, opposée au pied auquel aboutit la même jambe.

Chaque jambe de la structure tripode peut être inclinée au-dessus d'une partie de la surface antérieure du miroir primaire. Préférablement, la jambe peut alors posséder une courbure qui est non nulle, avec une concavité qui est tournée à l'opposé d'une zone centrale du miroir primaire. Des déformations du support qui provoquent des variations d'inclinaison qui sont contraires pour les deux miroirs, peuvent être réduites ainsi. Des variations de la ligne de visée du télescope, qui résultent de telles variations en sens opposés des inclinaisons respectives des miroirs primaire et secondaire, sont diminuées en conséquence.

Avantageusement pour des réalisations du support à structure tripode, celui-ci peut être formé en une pièce unique qui est constituée d'un seul matériau solide et continu entre les pieds, les jambes, les jonctions, la couronne externe et les segments intermédiaires.

Un second aspect de l'invention propose un système optique d'observation et de détection qui comprend :
- un dispositif à orientation variable, qui comprend lui-même une embase de chargement et qui est adapté pour contrôler des variations angulaires en site et en azimut d'une position de cette embase par rapport à une structure externe qui supporte le dispositif à orientation variable ; et
- un télescope à faibles déformations qui est conforme au premier aspect de l'invention, et qui est fixé sur l'embase par les portions de fixation de ce télescope.

Le télescope présente alors des déformations statiques qui sont faibles, même lorsqu'il est tourné rapidement par le dispositif à orientation variable.

En outre, étant donné que le télescope présente des déformations dynamiques qui sont aussi réduites lorsqu'il est soumis à des vibrations dont les fréquences fondamentales et celles des harmoniques d'amplitudes significatives, sont inférieures à 100 Hz, l'ensemble du système optique d'observation de détection est particulièrement adapté pour être embarqué à bord d'un hélicoptère.

Ces caractéristiques et avantages de l'invention sont maintenant décrits en détail en référence aux figures suivantes, qui illustrent des modes de réalisation non limitatifs :
- les Figures 1a et 1b sont deux vues en perspective d'un télescope selon l'invention, respectivement par le dessus et le dessous du télescope ;
- la Figure 2 est une vue éclatée du télescope des Figures 1a et 1b ;
- la Figure 3a est une vue en coupe transversale du télescope des Figures 1a et 1b, et la Figure 3b est un agrandissement d'une partie de la Figure 3a ;
- la Figure 4 est une vue en perspective d'une partie d'un miroir primaire du télescope des Figures 1a et 1b, par le dessous ;
- La Figure 5 est une vue en perspective d'une partie centrale d'un support interne au télescope des Figures 1a et 1b ;
- la Figure 6 est un schéma de principe de connexions mises en œuvre entre le miroir primaire et le support du télescope des Figures 1a et 1b ; et
- la Figure 7 est un schéma de principe de connexions mises en œuvre entre le support et le miroir secondaire du télescope des Figures 1a et 1b.

Pour raison de clarté, les dimensions qui apparaissent dans ces figures ne correspondent ni à des dimensions réelles, ni à des rapports réels de dimensions. En outre, des références numériques identiques qui sont indiquées dans plusieurs de ces figures désignent des éléments identiques ou qui ont des fonctions identiques.

Le télescope 100 comprend un miroir primaire 1, un miroir secondaire 2, un support 3 et des éléments de connexion qui seront détaillés plus loin.

Le miroir primaire 1 comporte une face antérieure 10 à fonction de miroir, une face postérieure 11, et un bord périphérique externe 12 qui relie latéralement les faces 10 et 11. De façon connue, le miroir 1 peut comporter une ouverture centrale 13, et la face postérieure 11 peut comporter une structure alvéolaire. Cette structure alvéolaire réalise un compromis entre une masse du miroir primaire 1 qui est limitée et une raideur du miroir qui est élevée.

Le miroir secondaire 2 possède un bord périphérique 20 qui est avantageusement circulaire, et qui est plus petit en diamètre que le bord périphérique externe 12 du miroir primaire 1.

Le support 3 maintient rigidement le miroir 2 au dessus de la face antérieure 10 du miroir 1, par exemple dans une position qui est centrée et de sorte que les axes optiques respectifs des miroirs 1 et 2 soient superposés. Toutefois, l'invention n'est pas limitée à cette configuration géométrique et optique particulière. Dans le mode de réalisation de l'invention qui est décrit en détail, le support 3 comprend les parties suivantes : une couronne externe 30 et une couronne intermédiaire 31 qui entourent le bord périphérique 20 du miroir secondaire 2, trois pieds référencés 34a-34c, trois paires de jambes 35a-35f, et six jonctions 36a-36f qui connectent rigidement les extrémités des jambes une-à-une à la couronne externe 30. De préférence, le support 3 est constitué d'une seule pièce, en un matériau homogène qui peut être identique à celui du miroir primaire 1, par exemple en aluminium RSA.

Les trois pieds 34a-34c peuvent être écartés deux-à-deux de 110° à 130° (degré) autour de l'axe optique du miroir primaire 1. Chaque pied 34a-34c peut être tubulaire avec un axe de révolution qui est parallèle à l'axe optique du miroir primaire 1. La paire de jambes 35a-35b relie le pied 34a à la couronne extérieure 30, avec les jonctions 36a et 36b qui connectent chacune à la couronne extérieure 30 l'extrémité de la jambe 35a ou 35b qui est opposée au pied 34a. De même, la paire de jambes 35c-35d relie le pied 34b à la couronne extérieure 30, avec les jonctions 36c et 36d qui connectent chacune à la couronne extérieure 30 l'extrémité de la jambe 35c ou 35d qui est opposée au pied 34b. Enfin, la paire de jambes 35e-35f relie le pied 34c à la couronne extérieure 30, avec les jonctions 36e et 36f qui connectent chacune à la couronne extérieure 30 l'extrémité de la jambe 35e ou 35f qui est opposée au pied 34c. Les six jonctions 36a-36f peuvent être réparties angulairement sur la couronne extérieure 30, avec des écarts angulaires qui sont compris entre 50° et 70° environ, entre deux jonctions voisines. Toutefois, l'écart angulaire entre deux jonctions voisines qui connectent des jambes d'une même paire peut être supérieur à l'écart entre deux jonctions voisines qui connectent des jambes appartenant à deux paires différentes. Les jambes d'une même paire sont de préférence symétriques entre elles par rapport à un plan méridien qui contient l'axe optique du miroir 1 et l'axe de révolution du pied correspondant à cette paire. Les jambes de paires différentes peuvent être identiques.

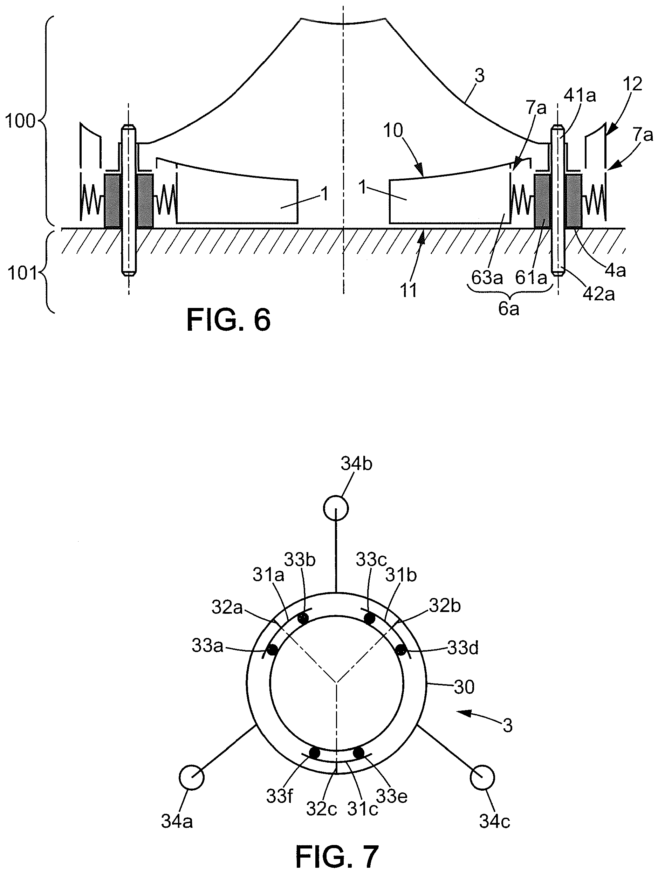

Chaque pied 34a (respectivement 34b, 34c) du support 3 est relié au miroir 1 par une connexion rigide qui peut comprendre un goujon 4a (resp. 4b, 4c) et un écrou 5a (resp. 5b, 5c). Les trois connexions rigides traversent chacune le miroir primaire 1 entre la face antérieure 10 réfléchissante et la face postérieure 11 respectivement à trois endroits de la face antérieure 10 réfléchissante séparés les uns des autres. En particulier, chaque goujon 4a (resp. 4b, 4c) possède une extrémité supérieure 41a (resp. 41b, 41c) qui peut être munie d'un pas de vis, et qui est enfilée dans le pied 34a (resp. 34b, 34c) du support 3 et bloquée par l'écrou 5a (resp. 5b, 5c). Chaque goujon 4a (resp. 4b, 4c) possède une longueur suffisante pour traverser le miroir primaire 1, de sorte qu'une extrémité inférieure 42a (resp. 42b, 42c) du goujon déborde au-delà de la surface postérieure 11 du miroir primaire 1. Ces extrémités 42a-42c, qui sont solidaires de l'ensemble du télescope 100 lorsque celui-ci est assemblé, permettent de le fixer sur une embase extérieure 101 (Figure 6). Ainsi, les extrémités 42a-42c constituent des portions de fixation du télescope 100, et l'axe de révolution de chaque pied 34a (resp. 34b, 34c), qui est confondu avec l'axe longitudinal du goujon 4a (resp. 4b, 4c) correspondant, constitue la direction de liaison du support 3 à cette portion de fixation. Chaque connexion rigide relie ainsi le support 3 à la portion de fixation respective indépendamment du miroir primaire 1. Autrement dit, la liaison entre le support 3 et les portions de fixation est assurée uniquement par les connexions rigides. En d'autres termes encore, les connexions rigides relient directement le support 3 aux portions de fixation.

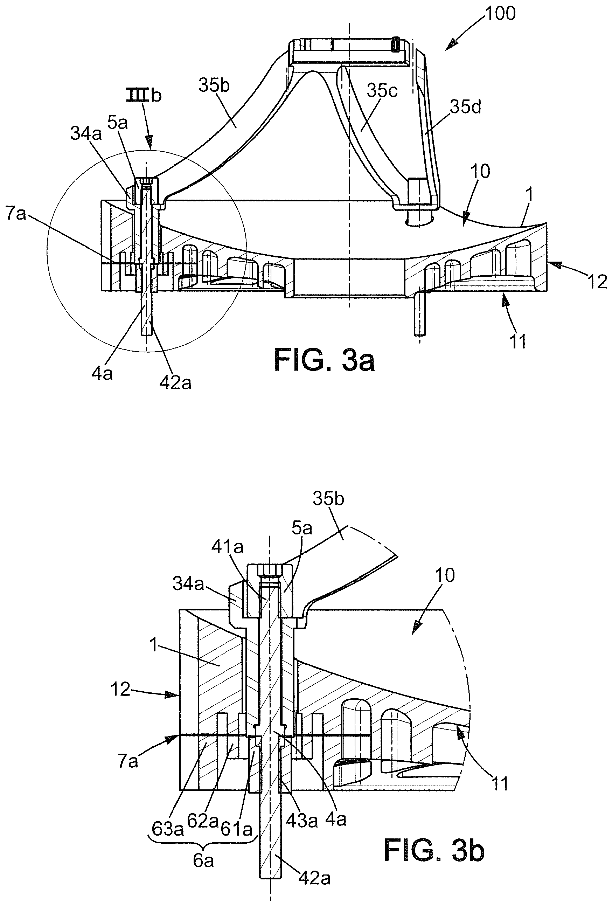

Chaque goujon 4a (resp. 4b, 4c) est en outre connecté rigidement au miroir primaire 1 par la surface latérale de ce goujon dans un segment de longueur qui est limité entre ses extrémités 41a (resp. 41b, 41c) et 42a (resp. 42b, 42c). Comme cela est visible sur la Figure 3b, le goujon 4a peut être collé latéralement au miroir primaire 1 sur le segment de longueur 43a. Des collages similaires connectent latéralement les goujons 4b et 4c au miroir primaire 1.

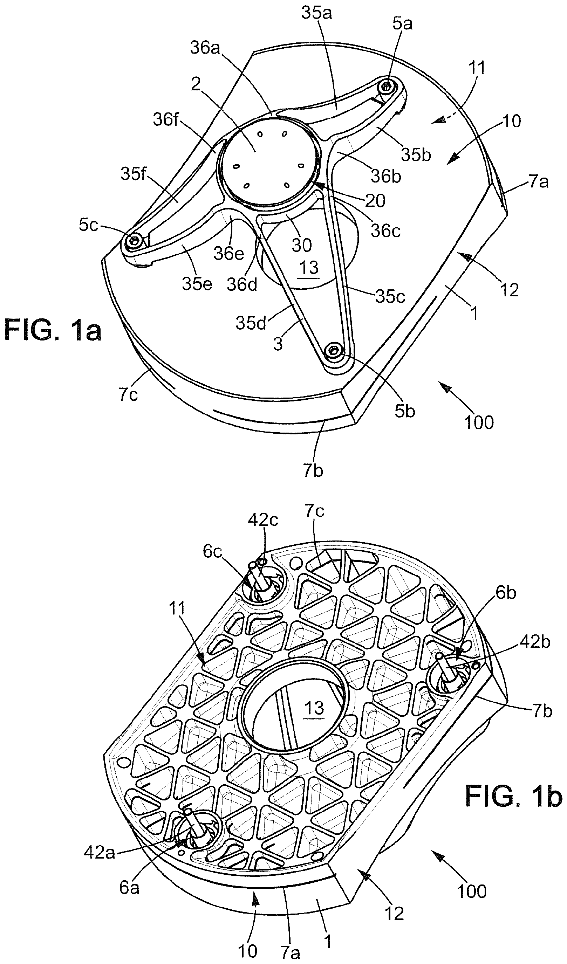

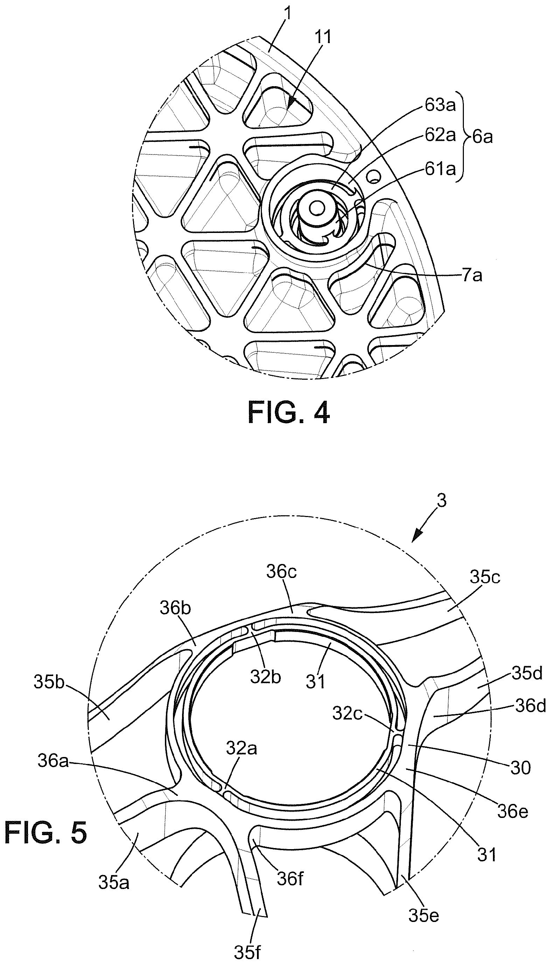

L'intervention décrite maintenant a pour but de réduire les déformations de la surface antérieure 10 du miroir primaire 1, que pourraient provoquer des contraintes en tilt exercées sur les goujons 4a-4c. De telles contraintes peuvent résulter de la fixation du support 3 sur chaque goujon 4a-4c, au niveau des pieds 34a-34c, et/ou résulter de la fixation des extrémités inférieures 42a-42c des goujons 4a-4c sur l'embase 101 du télescope 100. Pour cela, le miroir primaire 1 est pourvu d'une structure solide de cardan à proximité de la face postérieure 11, autour de chaque goujon 4a-4c. Une telle structure de cardan, ou cardan à déformation solide, ci-après cardan, est référencée 6a sur les Figures 3b et 4 pour le pied 34a du support 3. Des cardans analogues 6b et 6c sont réalisés pour les pieds 34b et 34c (Figure 1b). Le cardan 6a comprend un étage interne 61a qui entoure le goujon 4a en étant collé à celui-ci sur le segment de longueur 43a, un étage intermédiaire 62a, et un étage externe 63a qui est solidaire du miroir primaire 1. L'étage interne 61a et l'étage intermédiaire 62a sont connectés par deux ponts solides qui sont opposés de part et d'autre de l'axe du goujon 4a. De même, deux autres ponts solides et opposés autour du goujon 4a connectent l'étage intermédiaire 62a à l'étage externe 63a. En outre, les deux ponts entre les étages 61a et 62a sont de préférence à 90° des ponts entre les étages 62a et 63a. Ainsi, un tilt du goujon 4a dans une orientation quelconque est accommodé par des déformations des ponts, sans produire de contraintes à distance au sein du miroir primaire 1, en s'éloignant selon des directions radiales à partir de chaque cardan. Le miroir primaire 1 est ainsi pourvu de trois cardans 6a-6c, un pour chaque pied 34a-34c du support 3. Chaque cardan 6a-6c peut être réalisé par un usinage approprié du miroir primaire 1, à partir d'une ébauche de forme moulée dans la zone concernée. De cette façon, chaque cardan 6a-6c est partie intégrante du miroir primaire 1.

En outre, dans le miroir primaire 1 et au niveau de chaque cardan 6a-6c, une fente 7a-7c peut séparer avantageusement le cardan d'une partie du miroir 1 qui est proche de sa surface antérieure 10. Une telle fente 7a-7c peut s'étendre radialement plus loin que l'étage externe du cardan 6a-6c, à partir du goujon 4a-4c, respectivement. Elle permet d'éviter que des contraintes qui sont produites par la déformation du cardan 6a-6c, ne s'étendent jusqu'à la face antérieure 10 du miroir primaire 1. Ainsi, cette surface 10 ne subit presqu'aucune déformation statique même lorsque les goujons 4a-4c présentent des valeurs non nulles de tilt. Dans le schéma de la Figure 6, le cardan 6a est représenté sous forme d'une série de segments inclinés pour symboliser la barrière que constitue le cardan contre l'extension des contraintes.

Pour un support 3 conforme aux figures, et dont l'écartement entre l'axe de chacun des pieds 34a-34c et l'axe optique du miroir secondaire 2, est d'environ 78 mm, la fréquence la plus basse des modes propres de déformation par vibration du support peut être supérieure à 800 Hz, tandis que celle du miroir primaire 1 peut être de l'ordre de 620 Hz. Ces valeurs assurent que l'amplitude des vibrations à des fréquences inférieures à 100 Hz soit très faible.

L'assemblage du support 3 avec le miroir primaire 1 comprend alors les étapes successives suivantes : les goujons 4a-4c sont d'abord collés à l'intérieur de l'étage interne de chaque cardan 6a-6c, puis le support 3 est enfilé par les pieds 34a-34c sur les extrémités supérieures 41a-41c des goujons, et les écrous 5a-5c sont serrés sur les extrémités supérieures 41a-41c.

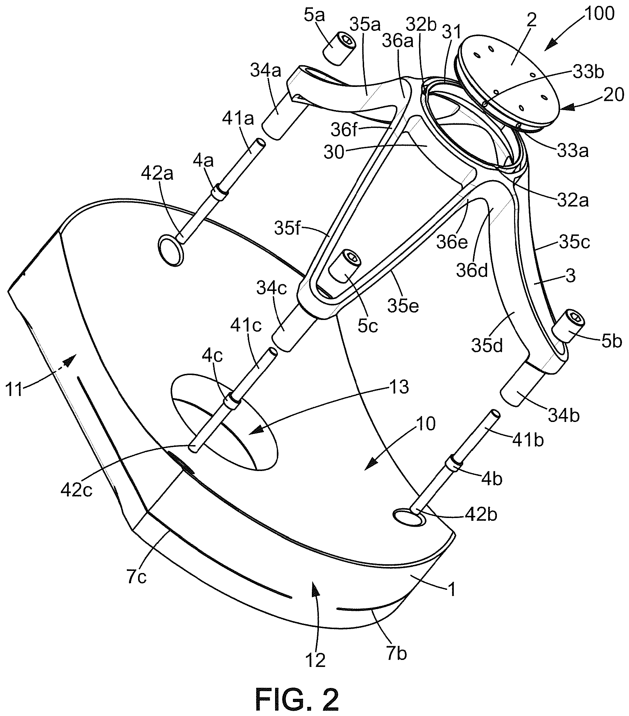

Des deuxièmes perfectionnements de l'invention concernent la connexion du support 3 au miroir secondaire 2, et ont pour but de réduire les déformations du miroir secondaire 2 que pourraient provoquer des contraintes transmises par le support 3. La couronne intermédiaire 31 (Figures 2 et 5) peut avantageusement être située entre la couronne extérieure 30 et le bord périphérique 20 du miroir secondaire 2, avec une configuration concentrique pour les couronnes 30 et 31 par rapport au bord périphérique 20. Les couronnes 30 et 31 peuvent être séparées par un évidement intermédiaire continu en dehors de trois ponts 32a-32c qui peuvent être séparés de 120° environ autour du miroir secondaire 2. Les trois ponts 32a-32c relient rigidement la couronne intermédiaire 31 à la couronne extérieure 30, et ont chacun une section restreinte pour leur permettre de se déformer dès que des contraintes sont présentes, même de faible intensité. Pour tenir compte de déformations statiques du support 3 qui pourraient être causées par l'assemblage de ce dernier avec le miroir primaire 1, le support 3 peut d'abord être fixé définitivement sur le miroir primaire 1 comme décrit précédemment, puis la couronne intermédiaire 31 peut être usinée avec la précision désirée.

La couronne intermédiaire 31 peut alors être connectée au bord périphérique 20 du miroir secondaire 2 en six points de connexion 33a-33f qui sont répartis par paires : deux points de connexion disposés symétriquement de part et d'autre de chacun des ponts 32a-32c. Par exemple, chaque point de connexion d'une paire peut être séparé angulairement de 43° environ le long de la couronne intermédiaire 31 par rapport au pont central pour cette paire. Dans des modes d'assemblage préférés du télescope 100, chaque point de connexion 33a-33f peut être un point de collage du miroir secondaire 2 sur le support 3, à l'intérieur de la couronne intermédiaire 31. Les points de connexion 33a et 33b sont visibles sur la Figure 2 de part et d'autre du pont 32a.

Selon une alternative de réalisation possible qui est illustrée par le schéma de la Figure 7, la couronne 31 peut être remplacée par trois segments de couronne disjoints 31a-31c, dits segments intermédiaires, qui relient chacun les points de connexion au miroir secondaire 2 d'une même paire, à celui des ponts 32a-32c qui correspond à cette paire. Ainsi, le segment intermédiaire 31a peut relier les points de connexion 33a et 33b au pont 32a, le segment intermédiaire 31b peut relier les points de connexion 33c et 33d au pont 32b, et le segment intermédiaire 31c peut relier les points de connexion 33e et 33f au pont 32c. Chaque segment intermédiaire 31a-31c est préférablement symétrique par rapport au pont 32a-32c qui le relie à la couronne extérieure 30.

Le miroir secondaire 2 étant plus petit que le miroir primaire 1, chaque jambe 35a-35f est inclinée au dessus d'une partie de la surface antérieure 10 du miroir primaire 1. Selon un troisième perfectionnement de l'invention, chacune des jambes 35a-35f est courbe avec un centre de courbure qui est situé d'un côté de cette jambe qui est opposé à la zone centrale du miroir primaire 1, c'est-à-dire du côté de la jambe opposé à l'ouverture centrale 13. Autrement dit, chacune des jambes 35a-35f possède une concavité qui est tournée à l'opposé de l'ouverture 13 du miroir primaire 1. Ainsi, chaque jambe 35a-35f possède un bord convexe en vis-à-vis de la face antérieure 10 du miroir primaire 1, ce bord convexe étant en outre incliné par rapport à la surface antérieure 10 afin que le support 3 maintienne le miroir secondaire 2 à distance de la surface 10. Grâce à une telle orientation de la courbure des jambes 35a-35f, l'amplitude des inclinaisons en sens opposés des miroirs 1 et 2 que provoquent des déformations dynamiques, est divisée d'un facteur deux par rapport au cas de jambes de même longueur mais rectilignes, pour une même amplitude de vibration externe à une fréquence comprise entre 30 Hz et 40 Hz, pouvant être transmise par un véhicule sur lequel est monté le télescope.

Le schéma de la Figure 6 montre en outre l'embase de chargement 101 du télescope 100. Cette embase 101 peut être partie d'un dispositif à orientation variable, qui permet de varier de façon contrôlée en site et en azimut la direction de la ligne de visée du télescope 100. Par exemple, les extrémités inférieures 42a-42c des goujons 4a-4c peuvent filetées, de façon à être assemblées par vissage dans l'embase 101, ou bloquées contre celle-ci au moyen d'écrous dédiés (non représentés).

Il est entendu que l'invention peut être reproduite en adaptant certains de ses aspects secondaires par rapport à la description détaillée fournie ci-dessus, tout en conservant certains au moins des avantages cités. En particulier, l'utilisation du télescope à bord d'un hélicoptère n'est pas limitative, et de nombreuses autres utilisations peuvent bénéficier des avantages d'un télescope qui est conforme à la présente invention.

## Revendications

1. Télescope (100) à faibles déformations, comprenant :
- un miroir primaire (1) ayant une face antérieure (10) réfléchissante, une face postérieure (11), et un bord périphérique (12) connectant extérieurement les faces antérieure et postérieure ;
- un support (3) s'étendant sur un même premier côté du miroir primaire (1) que la face antérieure (10) ;
- un miroir secondaire (2) plus petit que le miroir primaire (1), et maintenu rigidement par le support (3) en avant de la face antérieure (10) ;
- trois portions de fixation situées sur un même second côté du miroir primaire (1) que la face postérieure (11), et adaptées pour fixer le télescope (100) par ledit second côté sur une embase (101) externe audit télescope ; et
- trois connexions rigides reliant le support (3) respectivement aux trois portions de fixation, à travers le miroir primaire (1) et à distance du bord périphérique (12) en direction d'une zone centrale dudit miroir primaire, et chaque connexion rigide étant reliée en outre au miroir primaire latéralement par rapport à une direction de liaison du support à la portion de fixation relative à ladite connexion rigide, les trois connexions rigides traversant chacune le miroir primaire entre la face antérieure (10) réfléchissante et la face postérieure (11) respectivement à trois endroits de la face antérieure réfléchissante séparés les uns des autres, et chaque connexion rigide reliant le support à la portion de fixation respective indépendamment du miroir primaire,
**caractérisé en ce que** chaque connexion rigide étant reliée au miroir primaire (1) par l'intermédiaire d'un cardan (6a-6c) à déformation solide, la connexion rigide étant solidaire d'un étage interne (61a) du cardan, et un étage externe (63a) de chaque cardan étant solidaire du miroir primaire, le miroir primaire (1) et chaque cardan (6a-6c) forment une pièce unique constituée d'un seul matériau solide et continu entre ledit miroir primaire et l'étage interne (61a) dudit cardan ; et le miroir primaire (1) présente une fente (7a-7c) qui s'étend autour de chaque connexion rigide et transversalement par rapport à la direction de liaison du support (3) à la portion de fixation relative à ladite connexion rigide, et la fente est située entre le cardan (6a-6c) relatif à ladite connexion rigide et la face antérieure (10) du miroir primaire.

2. Télescope selon la revendication 1, dans lequel chaque connexion rigide comprend un goujon (4a-4c) avec une première extrémité (41a-41c) dudit goujon qui est connectée rigidement au support (3), et une seconde extrémité (42a-42c) dudit goujon qui est opposée à ladite première extrémité et qui forme une des portions de fixation.

3. Télescope selon la revendication 2, dans lequel chaque connexion rigide comprend en outre un écrou (5a-5c) disposé pour retenir fixement le support (3) sur la première extrémité (41a-41c) du goujon (4a-4c) de ladite connexion rigide.

4. Télescope selon la revendication 2 ou 3, dans lequel chaque goujon (4a-4c) de connexion rigide est collé au miroir primaire (1) par une surface latérale (43a) dudit goujon.

5. Télescope selon l'une quelconque des revendications précédentes, dans lequel le support (3) comprend :
- une couronne externe (30) qui entoure un bord périphérique (20) du miroir secondaire (2), en étant distante radialement dudit bord périphérique du miroir secondaire ; et
- trois segments intermédiaires (31a-31c) situés entre la couronne externe (30) et le bord périphérique (20) du miroir secondaire (2), chacun desdits segments intermédiaires étant connecté au miroir secondaire au niveau de deux extrémités opposées dudit segment intermédiaire, et connecté à la couronne externe au niveau d'une zone centrale dudit segment intermédiaire située entre les deux extrémités du même segment intermédiaire.

6. Télescope selon la revendication 5, dans lequel les segments intermédiaires (31a-31c) sont continus entre deux segments intermédiaires voisins autour du miroir secondaire (2), de façon à former une couronne intermédiaire (31) située radialement entre la couronne externe (30) et le miroir secondaire, ladite couronne intermédiaire étant connectée à ladite couronne externe en trois endroits (32a-32c) séparés et répartis angulairement autour du miroir secondaire, et connectée au miroir secondaire en six autres endroits (33a-33f) aussi séparés et répartis angulairement autour dudit miroir secondaire.

7. Télescope selon la revendication 5 ou 6, dans lequel chaque extrémité de segment intermédiaire (31a-31c) est connectée par collage au bord périphérique (20) du miroir secondaire (2).

8. Télescope selon l'une quelconque des revendications 5 à 7, dans lequel le support (3) comprend en outre une structure rigide tripode ayant elle-même :
- trois pieds (34a-34c) reliés un-à-un aux trois connexions rigides ;
- six jambes (35a-35f) aboutissant par paires à chacun des trois pieds (34a-34c) ; et
- six jonctions (36a-36f) séparées angulairement le long de la couronne externe (30), et connectant chacune rigidement ladite couronne externe à une extrémité supérieure d'une des jambes (35a-35f), opposée au pied (34a-34c) auquel aboutit ladite jambe.

9. Télescope selon la revendication 8, dans lequel chaque jambe (35a-35f) est inclinée au dessus d'une partie de la surface antérieure (10) du miroir primaire (1), et possède une courbure non nulle avec une concavité qui est tournée à l'opposé d'une zone centrale dudit miroir primaire.

10. Télescope selon la revendication 8 ou 9, dans lequel le support (3) est formé en une pièce unique constituée d'un seul matériau solide et continu entre les pieds (34a-34c), les jambes (35a-35f), les jonctions (36a-36f), la couronne externe (30) et les segments intermédiaires (31a-31c).

11. Système optique d'observation et de détection comprenant :
- un dispositif à orientation variable, comprenant lui-même une embase de chargement (101) et adapté pour contrôler des variations angulaires en site et en azimut d'une position de ladite embase par rapport à une structure externe supportant le dispositif à orientation variable ; et
- un télescope à faibles déformations (100) selon l'une quelconque des revendications précédentes, fixé sur l'embase (101) par les portions de fixation dudit télescope.

## Patentansprüche

1. Verformungsarmes Teleskop (100), das folgendes umfasst:
- einen Hauptspiegel (1) mit einer reflektierenden Vorderseite (10), einer Rückseite (11) und einer Umfangskante (12), welche die Vorder- und Rückseite außen miteinander verbindet;
- - eine Halterung (3), die sich an einer ersten, der Vorderseite (10) entsprechenden Seite des Hauptspiegels (1) erstreckt
- einen Fangspiegel (2), der kleiner ist als der Hauptspiegel (1) und von der Halterung (3) vor der Vorderseite (10) starr gehalten wird;
- drei Befestigungsabschnitte, die sich an einer zweiten, der Rückseite (11) entsprechenden Seite des Hauptspiegels (1) befinden, und so konzipiert sind, dass das Teleskop (100) über die zweite Seite an einem Sockel (101) außerhalb des Teleskops befestigt werden kann; und
- drei starre Verbindungen, die die Halterung (3) jeweils mit den drei Befestigungsabschnitten durch den Hauptspiegel (1) beabstandet von der Umfangskante (12) in Richtung eines Mittelbereichs des Hauptspiegels verbinden, wobei jede starre Verbindung des Weiteren seitlich mit dem Hauptspiegel in Bezug auf eine Verbindungsrichtung der Halterung mit dem Befestigungsabschnitt relativ zur starren Verbindung verbunden ist, und die drei starren Verbindungen jeweils zwischen der reflektierenden Vorderseite (10) und der Rückseite (11) an drei separaten Stellen auf der reflektierenden Vorderseite durch den Hauptspiegel verlaufen, wobei jede starre Verbindung die Halterung unabhängig vom Hauptspiegel mit dem jeweiligen Befestigungsabschnitt verbindet,
**dadurch gekennzeichnet, dass**
jede starre Verbindung mit dem Hauptspiegel (1) über ein Kardangelenk (6a-6c) mit Festkörperverformung verbunden ist, wobei die starre Verbindung fest verbunden ist mit einer inneren Stufe (61a) des Kardangelenks, und eine äußeren Stufe (63a) jedes Kardangelenks fest mit dem Hauptspiegel verbunden ist,
der Hauptspiegel (1) und jedes Kardangelenk (6a-6c) zwischen dem Hauptspiegel und der inneren Stufe (61a) des Kardangelenks ein durchgehendes Stück bilden, das aus einem einzigen festen und kontinuierlichen Material besteht;
und der Hauptspiegel (1) einen Schlitz (7a-7c) aufweist, der sich um jede starre Verbindung quer zur Verbindungsrichtung der Halterung (3) mit dem Befestigungsabschnitt relativ zur starren Verbindung erstreckt, wobei der Schlitz zwischen dem Kardangelenk (6a-6c) relativ zur starren Verbindung und der Vorderseite (10) des Hauptspiegels angeordnet ist.

2. Teleskop nach Anspruch 1, bei dem jede starre Verbindung einen Stift (4a-4c) aufweist, wobei ein erstes Ende (41a-41c) des Stifts starr mit der Halterung (3) verbunden ist und ein zweites Ende (42a-42c) des Stifts dem ersten Ende gegenüberliegt und einen der Befestigungsabschnitte bildet.

3. Teleskop nach Anspruch 2, bei dem jede starre Verbindung des Weiteren eine Mutter (5a-5c) umfasst, die so angeordnet ist, dass sie die Halterung (3) am ersten Ende (41a-41c) des Stifts (4a-4c) der starren Verbindung fest hält.

4. Teleskop nach Anspruch 2 oder 3, bei dem jeder Stift (4a-4c) einer starren Verbindung an einer Seitenfläche (43a) des Stifts an den Hauptspiegel (1) geklebt ist.

5. Teleskop nach einem der vorhergehenden Ansprüche, bei dem die Halterung (3) folgendes umfasst:
- einem äußeren Kranz (30) um eine Umfangskante (20) des Fangspiegels (2) herum, der radial von der Umfangskante des Fangpiegels beabstandet ist; und
- drei Zwischensegmente (31a-31c) zwischen dem äußeren Kranz (30) und dem Umfangsrand (20) des Fangspiegels (2), wobei jedes der Zwischensegmente an zwei gegenüberliegenden Enden des Zwischensegments mit dem Fangspiegel verbunden ist und mit dem äußeren Kranz in einem Mittelbereich des Zwischensegments zwischen den beiden Enden desselben Zwischensegments verbunden ist.

6. Teleskop nach Anspruch 5, bei dem die Zwischensegmente (31a-31c) zwischen zwei benachbarten Zwischensegmenten um den Fangspiegel (2) herum durchgängig sind, so dass sie einen Zwischenkranz (31) bilden, der radial zwischen dem äußeren Kranz (30) und dem Fangspiegel angeordnet ist, wobei der Zwischenkranz mit dem äußeren Kranz an drei Stellen (32a-32c) verbunden ist, die getrennt und winkelig um den Fangspiegel herum verteilt sind, und mit dem Fangspiegel an sechs weiteren Stellen (33a-33f) verbunden ist, die ebenfalls getrennt und winkelig um den Fangspiegel herum verteilt sind.

7. Teleskop nach Anspruch 5 oder 6, bei dem jedes Ende des Zwischensegments (31a-31c) mit der Umfangskante (20) des Fangspiegels (2) verklebt ist.

8. Teleskop nach einem der Ansprüche 5 bis 7, bei dem die Halterung (3) des Weiteren eine starre Stativstruktur aufweist, die:
- drei Füße (34a-34c) hat, die eins-zu-eins mit den drei starren Verbindungen verbunden sind;
- sechs Schenkel (35a-35f) hat, die paarweise zu jedem der drei Schenkel (34a-34c) führen; und
- sechs Verbindungsstellen (36a-36f), die entlang des äußeren Kranzes(30) winklig voneinander getrennt sind und jeweils den äußeren Kranz starr mit einem oberen Ende eines der Schenkel (35a-35f) gegenüber dem Fuß (34a-34c) verbinden, zu dem das Bein führt.

9. Teleskop nach Anspruch 8, bei dem jeder Schenkel (35a-35f) oberhalb eines Teils der vorderen Fläche (10) des Hauptspiegels (1) geneigt ist und eine Krümmung ungleich Null mit einer Konkavität aufweist, die von einem Mittelbereich des genannten Hauptspiegels abgewandt ist.

10. Teleskop nach Anspruch 8 oder 9, bei dem die Halterung (3) zwischen den Füßen (34a-34c), den Schenkeln (35a-35f), den Verbindungen (36a-36f), dem äußeren Kranz (30) und den Zwischensegmenten (31a-31c) in einem einzigen Stück aus einem einzigen festen und durchgehenden Material geformt ist.

11. Optisches Beobachtungs- und Detektionssystem, das folgendes umfasst:
- eine Vorrichtung mit veränderlicher Ausrichtung, die einen Ladesockel (101) aufweist und so ausgelegt ist, dass Veränderungen des Höhen- und Azimutwinkels einer Position des Sockels in Bezug auf eine äußere Struktur, die die Vorrichtung mit veränderlicher Ausrichtung stützt, kontrolliert werden können, und
- ein verformungsarmes Teleskop (100) nach einem der vorhergehenden Ansprüche, das durch die Befestigungsabschnitte des Teleskops am Sockel (101) befestigt ist.

## Claims

1. Low deformation telescope (100) comprising:
- a primary mirror (1) having a reflecting front face (10), a rear face (11), and a peripheral edge (12) externally connecting the front and rear faces;
- a support (3) extending on a same first side of the primary mirror (1) as the front face (10);
- a secondary mirror (2) which is smaller than the primary mirror (1) and is held rigidly by the support (3) in front of the front face (10);
- three fixing portions located on a same second side of the primary mirror (1) as the rear face (11), and adapted to fix the telescope (100) by said second side on a base (101) external to said telescope; and
- three rigid connections connecting the support (3) respectively to the three fixing portions, through the primary mirror (1) and at a distance from the peripheral edge (12) towards a central area of said primary mirror, and each rigid connection being further connected to the primary mirror laterally with respect to a direction of connection of the support to the fixing portion relative to said rigid connection, the three rigid connections each passing through the primary mirror between the reflecting front face (10) and the rear face (11) respectively at three locations in the reflecting front face separated from each other, and each rigid connection connecting the support to the respective fixing portion independently of the primary mirror,
**characterised in that**
each rigid connection being connected to the primary mirror (1) by means of a gimbal (6a-6c) with solid deformation, the rigid connection being integral with an internal stage (61a) of the gimbal, and an external stage (63a) of each gimbal being integral with the primary mirror,
the primary mirror (1) and each gimbal (6a-6c) form a single piece made of a single solid material which is continuous between said primary mirror and the internal stage (61a) of said gimbal;
and primary mirror (1) has a slot (7a-7c) which extends around each rigid connection and transversely to the direction of connection of the support (3) to the fixing portion relative to said rigid connection, and the slot is located between the gimbal (6a-6c) relative to said rigid connection and the front face (10) of the primary mirror.

2. Telescope according to claim 1, wherein each rigid connection comprises a stud (4a-4c) with a first end (41a-41c) of said stud which is rigidly connected to the support (3), and a second end (42a-42c) of said stud which is opposite to said first end and which forms one of the fixing portions.

3. Telescope according to claim 2, wherein each rigid connection further comprises a nut (5a-5c) arranged to fixedly retain the support (3) on the first end (41a-41c) of the stud (4a-4c) of said rigid connection.

4. Telescope according to claim 2 or 3, wherein each rigid connection stud (4a-4c) is glued to the primary mirror (1) by a side surface (43a) of said stud.

5. Telescope according to any one of the preceding claims, wherein the support (3) comprises:
- an outer ring (30) that surrounds a peripheral edge (20) of the secondary mirror (2), radially spaced from said peripheral edge of the secondary mirror; and
- three intermediate segments (31a-31c) located between the outer ring (30) and the peripheral edge (20) of the secondary mirror (2), each of said intermediate segments being connected to the secondary mirror at two opposite ends of said intermediate segment, and connected to the outer ring at a central zone of said intermediate segment located between both ends of the same intermediate segment.

6. Telescope according to claim 5, wherein the intermediate segments (31a-31c) are continuous between two neighbouring intermediate segments around the secondary mirror (2), so as to form an intermediate ring (31) located radially between the outer ring (30) and the secondary mirror, said intermediate ring being connected to said outer ring at three locations (32a-32c) separated and angularly distributed around the secondary mirror, and connected to the secondary mirror at six other locations (33a-33f) also separated and angularly distributed around said secondary mirror.

7. Telescope according to claim 5 or 6, wherein each intermediate segment end (31a-31c) is adhesively connected to the peripheral edge (20) of the secondary mirror (2).

8. Telescope according to any one of claims 5 to 7, wherein the support (3) further comprises a rigid tripod structure having itself:
- three feet (34a-34c) connected one to one to the three rigid connections;
- six legs (35a-35f) terminating pairwise at each of the three feet (34a-34c); and
- six junctions (36a-36f) angularly separated along the outer crown (30), and each rigidly connecting said outer crown to an upper end of one of the legs (35a-35f), opposite the foot (34a-34c) at which said leg terminates.

9. Telescope according to claim 8, wherein each leg (35a-35f) is inclined above a portion of the anterior surface (10) of the primary mirror (1), and has a non-zero curvature with a concavity which faces away from a central area of said primary mirror.

10. Telescope according to claim 8 or 9, wherein the support (3) is formed in a single piece from a single solid and continuous material between the feet (34a-34c), the legs (35a-35f), the junctions (36a-36f), the outer crown (30) and the intermediate segments (31a-31c).

11. Optical observation and detection system comprising:
- a variable orientation device, itself comprising a loading base (101) and adapted to control angular variations in elevation and azimuth of a position of said base relative to an external structure supporting the variable orientation device; and
- a low-deformation telescope (100) according to one of the preceding claims, fixed to the base (101) by the fixing portions of said telescope.
